(19) Europäisches Patentamt
European Patent Office
Office européen des brevets

(11) Veröffentlichungsnummer: **0 138 762 B1**

(12) # EUROPÄISCHE PATENTSCHRIFT

(45) Veröffentlichungstag der Patentschrift: **19.07.89**

(51) Int. Cl.⁴: **A 01 N 43/80**

(21) Anmeldenummer: **84810438.6**

(22) Anmeldetag: **10.09.84**

(54) **Schädlingsbekämpfungsmittel.**

(30) Priorität: **14.09.83 CH 5009/83**

(43) Veröffentlichungstag der Anmeldung: **24.04.85 Patentblatt 85/17**

(45) Bekanntmachung des Hinweises auf die Patenterteilung: **19.07.89 Patentblatt 89/29**

(84) Benannte Vertragsstaaten: **AT BE CH DE FR IT LI**

(56) Entgegenhaltungen:
**DE–A– 1 667 970**
**DE–A– 1 770 853**
**DE–A– 1 915 387**
**DE–A– 2 029 387**

(73) Patentinhaber: **CIBA-GEIGY AG**
**Klybeckstrasse 141**
**CH-4002 Basel (CH)**

(72) Erfinder: **Drabek, Jozef, Dr.**
**Benkenstrasse 12**
**CH-4104 Oberwil (CH)**

**EP 0 138 762 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft die Verwendung von 3-Amino-4-chlor-1,2-benzisothiazol in der Schädlingsbekämpfung, sowie diese Verbindung enthaltende pestizide Mittel, wie in den Ansprüchen festgelegt.

Das erfindungsgemäss zu verwendende 3-Amino-4-chlor-1,2-benzisothiazol hat die Formel I

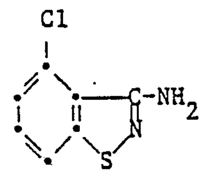

(I)

Die Verbindung der Formel I kann nach an sich bekannten Methoden (vgl. Liebigs Annalen der Chemie 729, 146-151 und DE-OS Nr. 1915387) z. B. wie folgt hergestellt werden :

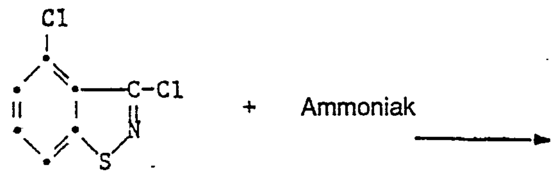


(I)

Die Verbindung der Formel I hat einen Schmelzpunkt von 164-165 °C.

Aus der DE-A-1 667 970 ist es bereits bekannt, 1,2-Benzisothiazole als Insektizide zu verwenden.

Aus der deutschen Offenlegungsschrift 1915387 ist es bereits bekannt, substituierte 1,2-Benzisothiazole als Herbizide zu verwenden. Dort wird auch die Herstellung des 3-Amino-4-chlor-1,2-benzisothiazols erwähnt. Ueberraschenderweise wurde nun gefunden, dass sich diese Verbindung ausgezeichnet zur Bekämpfung von Insekten und Vertretern der Ordnung Akarina an Pflanzen eignet, wobei die Verbindung wegen ihrer sehr geringen Warmblütertoxizität bemerkenswert ist.

Insbesondere kann die Verbindung der Formel I eingesetzt werden zur Bekämpfung von Insekten, z. B. der Ordnung Lepidoptera, Coleoptera, Homoptera, Heteroptera, Diptera, Thysanoptera, Orthoptera, Anoplura, Siphonaptera, Mallophaga, Thysanura, Isoptera, Psocoptera und Hymenoptera.

Vor allem eignet sich die Verbindung der Formel I zur Bekämpfung von pflanzenschädigenden Insekten, insbesondere pflanzenschädigenden, saugenden Insekten, wie Blattläusen, in Zier- und Nutzpflanzungen, insbesondere in Baumwollkulturen, Gemüsekulturen, Reiskulturen und Obstkulturen. Dabei ist nicht nur die Kontaktwirkung, sondern auch die systemische Wirkung der Verbindung der Formel I hervorzuheben.

Die Verbindung der Formel I wird in unveränderter Form oder vorzugsweise zusammen mit den in der Formulierungstechnik üblichen Hilfsmitteln eingesetzt und wird daher z. B. zu direkt versprühbaren oder verdünnbaren Lösungen, verdünnten Emulsionen, Spritzpulvern, löslichen Pulvern, Stäubemitteln, Granulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können z. B. in Frage kommen : aromatische Kohlenwasserstoffe, bevorzugt die Fraktionen $C_8$ bis $C_{12}$, wie z. B. Xylolgemische oder substituierte Naphthaline, Phthalsäureester, aliphatische Kohlenwasserstoffe, Alkohole und Glykole sowie deren Aether und Ester, stark polare Lösungsmittel, wie Dimethylsulfoxid, sowie gegebenenfalls epoxidierte Pflanzenöle.

Als feste Trägerstoffe, z. B. für Stäubemittel und dispergierbare Pulver, werden in der Regel natürliche Gesteinsmehle verwendet, wie Calcit, Talkum, Kaolin, Montmorillonit oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen, wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen eignen sich die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können. Ferner sind auch die Fettsäuremethyl-taurin-salze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate, wie z. B. Salze des Phosphorsäureesters eines p-Nonylphenol-(4-14)-äthylenoxid-Adduktes, sowie modifizierte und nicht modifizierte Phospholipide in Frage.

Als nichtionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxid-Addukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglykoläther, Polypropylenpolyäthylenoxid-Addukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quaternäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi (2-chloräthyl)-äthylammoniumbromid.

Die in der Formulierungstechnik gebräuchlichen Tenside sind u. a. in folgenden Publikationen beschrieben :

« Mc Cutcheon's Detergents and Emulsifiers Annual » MC Publishing Corp., Ridgewood, New Jersey, 1979 ; Dr. Helmut Stache « Tensid-Taschenbuch », Carl Hanser, Verlag München/Wien 1981.

Die erfindungsgemässen pestiziden Zubereitungen enthalten in der Regel 0,1 bis 99 %, insbesondere 0,1 bis 95 %, der Verbindung der Formel I, 1 bis 99,9 % eines festen oder flüssigen Zusatzstoffes und 0 bis 25 %, insbesondere 0,1 bis 25 %, eines Tensides.

Während als Handelsware eher konzentrierte Mittel bevorzugt werden, verwendet der Endverbraucher in der Regel verdünnte Mittel.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Formulierungsbeispiele (% = Gewichtsprozent)

| 1. Spritzpulver | a) | b) | c) |
|---|---|---|---|
| Wirkstoff der Formel I | 25% | 50% | 75% |
| Na-Ligninsulfonat | 5% | 5% | - |
| Na-Laurylsulfat | 3% | - | 5% |
| Na-Diisobutylnaphthalinsulfonat | - | 6% | 10% |
| Octylphenolpolyäthylengylkoläther (7-8 Mol AeO) | - | 2% | - |
| Hochdisperse Kieselsäure | 5% | 10% | 10% |
| Kaolin | 62% | 27% | - |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

| 2. Stäubemittel | a) | b) |
|---|---|---|
| Wirkstoff der Formel I | 5% | 8% |
| Talkum | 95% | - |
| Kaolin | - | 92% |

Man erhält anwendungsfertige Stäubemittel, indem der Wirkstoff mit dem Träger vermischt und auf einer geeigneten Mühle vermahlen wird.

3. Extruder Granulat

| | |
|---|---|
| Wirkstoff der Formel I | 10 % |
| Na-Ligninsulfonat | 2 % |
| Carboxymethylcellulose | 1 % |
| Kaolin | 87 % |

Der Wirkstoff wird mit den Zusatzstoffen vermischt, vermahlen und mit Wasser angefeuchtet. Dieses Gemisch wird extrudiert und anschliessend im Luftstrom getrocknet.

4. Umhüllungs-Granulat

| | |
|---|---|
| Wirkstoff der Formel I | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

5. Suspensions-Konzentrat

| | |
|---|---|
| Wirkstoff der Formel I | 40 % |
| Aethylenglykol | 10 % |
| Nonylphenolpolyäthylenglykoläther (15 Mol AeO) | 6 % |
| Na-Ligninsulfonat | 10 % |
| Carboxymethylcellulose | 1 % |
| 37 %ige wässrige Formaldehyd-Lösung | 0,2 % |
| Silikonöl in Form einer 75 %igen wässrigen Emulsion | 0,8 % |
| Wasser | 32 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

Beispiel 1 : Insektizide Kontakt-Wirkung : Aphis craccivora und Myzus persicae

Etwa 4 cm hohe, in Wasser angezogene Erbsenkeimlinge werden vor Versuchsbeginn je mit ca. 200 Individuen der Spezies Aphis craccivora bzw. Myzus persicae besiedelt. Die so behandelten Pflanzen werden 24 Stunden später mit einer wässrigen Suspension enthaltend 100 oder 50 ppm der zu prüfenden Verbindung bis zur Tropfnässe besprüht. Man verwendet pro Konzentration zwei Pflanzen. Eine Auswertung der erzielten Abtötungsrate erfolgt 48 Stunden nach Applikation. Der Versuch wird bei 20-22 °C und 60 % relativer Luftfeuchtigkeit durchgeführt.

Beispiel 2 : Insektizide systemische Wirkung : Aphis craccivora und Myzus persicae

Bewurzelte Bohnen- und Kohlpflanzen im 4- bis 5-Blatt-Stadium werden in Töpfe, welche 60 $cm^3$ Erde enthalten, verpflanzt. Anschliessend werden 50 ml einer wässrigen Formulierung der Verbindung der Formel I (erhalten aus einem 25 %igen Spritzpulver) jeweils in einer Konzentration von 50 ppm, 12,5 ppm bzw. 0,75 ppm direkt auf die Erde aufgegossen.

Nach 24 Stunden werden auf die oberirdischen Pflanzenteile der behandelten Bohnenpflanzen Läuse der Spezies Aphis craccivora gesetzt und die Pflanzen mit einem Plastikzylinder überdeckt, um die Läuse

vor einer eventuellen Kontakt- oder Gaswirkung der Testsubstanz zu schützen. In entsprechender Weise werden die behandelten Kohlpflanzen mit Myzus persicae besiedelt.

Die Auswertung der erzielten %-Abtötung erfolgt 48 Stunden nach Versuchsbeginn. Pro Konzentrationsdosis Testsubstanz werden zwei Pflanzen, je eine in einem separaten Topf, verwendet. Der Versuch wird bei ca. 25 °C und 60 % relativer Luftfeuchtigkeit durchgeführt.

Biologische Versuchsergebnisse

In der folgenden Tabelle sind Versuchsergebnisse auf der Basis der vorstehenden Beispiele 1 und 2 aufgeführt, und zwar mit folgendem Bewertungsindex in bezug auf die prozentuale Abtötung der Schädlinge.

A : 80-100 % Abtötung bei 0,75 ppm Wirkstoffkonzentration
B : 80-100 % Abtötung bei 12,5 ppm Wirkstoffkonzentration
C : 80-100 % Abtötung bei 50 ppm Wirkstoffkonzentration

| Kontaktwirkung | | Systemische Wirkung | |
|---|---|---|---|
| Myzus | Aphis | Myzus | Aphis |
| C | C | A | B |

**Patentansprüche**

1. Insektizides Mittel, dadurch gekennzeichnet, dass es neben geeigneten Träger- und/oder andern Zuschlagstoffen als aktive Komponente 0,75-50 ppm 3-Amino-4-chlor-1,2-benzisothiazol enthält.
2. Verwendung von 3-Amino-4-chlor-1,2-benzisothiazol zur Bekämpfung von Insekten.
3. Verwendung nach Anspruch 2 zur Bekämpfung von pflanzenschädigenden Insekten.
4. Verwendung nach Anspruch 3 zur Bekämpfung von saugenden Insekten.
5. Verwendung nach Anspruch 4 zur Bekämpfung von Aphiden.

**Claims**

1. Insecticidal composition containing as active ingredient 0.75-50 ppm of 3-amino-4-chloro-1,2-benzisothiazole together with suitable carriers and/or other adjuvants.
2. Use of 3-amino-4-chloro-1,2-benzisothiazole for controlling insects.
3. Use according to claim 2 for controlling plant-destructive insects.
4. Use according to claim 3 for controlling sucking insects.
5. Use according to claim 4 for controlling aphids.

**Revendications**

1. Produit insecticide, caractérisé en ce qu'il contient en tant que composant actif, à des concentrations de 0,75 à 50 ppm, le 3-amino-4-chloro-1,2-benzoisothiazole avec des véhicules et/ou d'autres additifs appropriés.
2. Utilisation du 3-amino-4-chloro-1,2-benzoisothiazole dans la lutte contre les insectes.
3. Utilisation selon la revendication 2, dans la lutte contre les insectes nuisibles pour les végétaux.
4. Utilisation selon la revendication 3, dans la lutte contre les insectes suceurs.
5. Utilisation selon la revendication 4, dans la lutte contre les aphidés.